# EUROPÄISCHE PATENTSCHRIFT

(11) **EP 3 149 836 B1**
(45) Veröffentlichungstag und Bekanntmachung des Hinweises auf die Patenterteilung: **17.11.2021**
(21) Anmeldenummer: 15719407.7
(22) Anmeldetag: 14.04.2015
(51) Int. Cl.: H02K 3/28

(54) **ELEKTRISCHE MASCHINE**
ELECTRICAL MACHINE
MACHINE ÉLECTRIQUE

(30) Priorität: 28.05.2014 DE 102014007722
(43) Veröffentlichungstag der Anmeldung: 05.04.2017
(73) Patentinhaber: SEW-EURODRIVE GmbH & Co. KG, 76646 Bruchsal (DE)
(72) Erfinder: MEYER, Christine, 76149 Karlsruhe (DE); HAGEMANN, Björn, 77955 Ettenheim (DE); NESTLER, Helmut, 76646 Bruchsal (DE); BOERMANN, Friedrich, 76694 Forst (DE); DREHER, Florian, 76689 Kalsdorf-Neuthard (DE)
(86) Internationale Anmeldenummer: PCT/EP2015/000775
(87) Internationale Veröffentlichungsnummer: WO 2015/180811

(56) Entgegenhaltungen:
- EP-A1- 2 830 193
- DE-A1- 10 321 956
- US-A1- 2009 146 523
- US-A1- 2009 276 997
- US-A1- 2011 000 078

## Beschreibung

Die Erfindung betrifft eine elektrische Maschine, insbesondere Drehstrommotor.

Aus der Seite 68 und 69 der Veröffentlichung "Handbuch Elektrische Kleinantriebe" von Stölting und Kallenbach, ISBN-13: 978-3-446-40019-1, ist offenbart, was eine Zweischichtwicklung ist.

Aus der US 2012/0293034ist das Schweißverbinden von Formdrähten einer Wellenwicklung bekannt.

Aus der DE 10 2008 021 779 A1 und der DE 10 2004 035 084 A1 sind Wellenwicklungen bekannt.

Aus der DE 10 2004 035 084 A1 ist eine solche Wicklung bekannt, die aus einem umlaufenden Draht pro umlaufende Welle gefertigt ist.

Aus der US 2009 /146523 A1 ist als nächstliegender Stand der Technik eine elektrische Maschine bekannt.

Aus der WO 2008/108351 A1 ist ein Stator für eine rotierende elektrische Vorrichtung bekannt.

Aus der US 2011/000078 A1 ist ein Verfahren zum Herstellen einer Statorwindung bekannt.

Aus der US 2009/276997 A1 ist eine Verfahren zur Herstellung von Spulen mit rechteckiger Wellenwicklung bekannt.

Aus der DE 103 21 956 A1 sind Wicklungen aus rechtwinkligen Kupferhaarnadeln in mehreren Sätzen für elektrische Maschinen bekannt.

Aus der EP 2 380 193 A1 ist ein Stator für eine rotierende Maschine bekannt.

Der Erfindung liegt daher die Aufgabe zugrunde, Verluste zu verringern und die Leistungsdichte zu erhöhen bei einer elektrischen Maschine.

Erfindungsgemäß wird die Aufgabe bei der elektrischen Maschine nach den in Anspruch 1 angegebenen Merkmalen gelöst. Weitere Ausführungsformen der Erfindung sind in den abhängigen Ansprüchen 2 - 8 definiert.

Von Vorteil ist dabei, dass Ausgleichsströme klein haltbar sind und somit Verluste, insbesondere einseitige Stromverdrängungsverluste minimierbar sind. Gleichzeitig werden durch mehrere parallele Drähte die Biegeradien im Vergleich zu einem Draht mit dem gleichen Gesamtquerschnitt verringert, was die Leistungsdichte weiter erhöht. Zusätzlich verringert die Aufteilung in mehrere Einzeldrähte auch die zweiseitige Stromverdrängung, insbesondere also den Skineffekt.

Erfindungsgemäß ist die Wicklung eine als Zweischichtwicklung ausgeführte Wellenwicklung. Im Gegensatz zur bekannten Zweischichtwicklung werden nicht einzelne Drähte, sondern gesamte Drahtbündel in zwei Schichten gewickelt. Von Vorteil ist dabei, dass eine einfache Wicklungsart anwendbar ist und mittels der Zweischichtwicklung durch eine geringe Wickelkopfhöhe eine hohe Leistungsdichte erreichbar ist.

Erfindungsgemäß ist jeder Wicklungsdrahtabschnitt aus Formdraht mit rechteckförmigem oder quadratischem Drahtquerschnitt gefertigt, wobei die Nuten jeweils einen rechteckförmigen oder einen quadratischen Nutquerschnitt aufweisen. Von Vorteil ist dabei, dass ein hoher Füllfaktor erreichbar ist, da der Nutquerschnitt derart an den Drahtquerschnitt anpassbar ist, dass eine lückenfreie oder zumindest lückenarme Befüllung der Nut mit Wicklungsdrahtabschnitten ausführbar ist. Die Wicklungsdrähte innerhalb eines Bündels sind dabei elektrisch voneinander isoliert, wie beispielsweise durch entsprechende Beschichtung der Drähte.

Erfindungsgemäß durchläuft jeder Wicklungsdrahtabschnitt eines Bündels mehrfach jeweils die gleiche Stapelposition beziehungsweise alternierend mehrere gleiche Stapelpositionen, insbesondere bei Zweischichtwicklung alternierend jeweils zwei oder mehr gleiche Stapelpositionen mehrfach hintereinander.

Am Ende eines Bündels werden die Wicklungsdrahtabschnitte individuell mit den Wicklungsdrahtabschnitten des nachfolgenden Bündels elektrisch verbunden, beispielsweise verlötet, vercrimpt oder verschweißt. Im nachfolgenden Bündel werden weitere Stapelpositionen durchlaufen.

Erfindungsgemäß sind die Bündel als Windung, insbesondere also Umlauf, der Wicklung um die Rotorachse herum ausgeführt. Ein einzelnes Bündel erstreckt sich dabei über den gesamten Umlauf oder über einen Teil des Umlaufs derart, dass in Kombination mit weiteren Bündeln alle Nuten beziehungsweise Nutanteile einer Phase und in Kombination mit wiederum weiteren Bündeln auch die Nuten beziehungsweise Nutanteile der übrigen Phasen belegt werden. Diejenigen Verschaltbereiche, welche jeweils im Übergang zwischen unterschiedlichen Bündeln entstehen, werden somit auf wenige lokalisierte Bereiche beschränkt, wobei die kleinste mögliche Anzahl Eins ist, die dann realisiert wird, wenn sich alle Bündel über einen gesamten Umlauf erstrecken.

Betrachtet man eine elektrisch in Reihe geschaltete Abfolge von Wicklungsdrahtabschnitten, so können sie in ihrer Gesamtheit mehrfach um das Aktivteil, insbesondere also Stator oder Rotor, umlaufen und dabei in unterschiedlichen Umläufen oder bereits nach Teilumläufen die Stapelpositionen wechseln und damit unterschiedliche Stapelpositionen auffüllen.

In einer vorteilhaften Ausführung liegen zwei oder mehr mit derselben Phase belegte Nuten nebeneinander, wie beispielsweise bei einer Lochzahl von Zwei, und die Wicklungsdrahtabschnitte der in den unterschiedlichen Nuten liegenden Bündel sind elektrisch zu einer gemeinsamen Abfolge verschaltet.

Erfindungsgemäß weist die elektrisch in Reihe geschaltete Abfolge eine Anzahl von Wicklungsdrahtabschnitten auf, insbesondere eine Anzahl von vier Wicklungsdrahtabschnitten. Von Vorteil ist dabei, dass eine gleichmäßige Befüllung der Stapelpositionen ausführbar ist.

Die Stapelpositionen sind dabei nicht unbedingt zugleich in einer einzigen Nut alle von der Abfolge befüllt, sondern es ist auch erlaubt, dass eine erste Anzahl von Stapelpositionen in einer ersten Anzahl von Nuten von der Abfolge befüllt werden und die restlichen Stapelpositionen in einer entsprechenden Anzahl von zweiten Nuten oder in weiteren Nuten befüllt werden. Wichtig ist dabei aber, dass die Abfolge, also elektrisch in Reihe geschaltete Wicklungsdrahtabschnitte, alle Stapelpositionen gleich oft belegen. Beispielsweise durchläuft jeder Wicklungsdrahtabschnitt der Abfolge im Wesentlichen einen Umlauf, also eine Windung, und wird dann mit dem nächsten Wicklungsdrahtabschnitt elektrisch verbunden, insbesondere schweiß-, crimp- oder lötverbunden. Die so gebildete elektrisch in Reihe geschaltete Abfolge belegt in einer ersten Nutanzahl alle Stapelpositionen oder alternativ in einer ersten Nutanzahl eine erste Anzahl von Stapelpositionen und die restlichen Stapelpositionen in einer Anzahl von zweiten Nuten. Alternativ werden die restlichen Stapelpositionen nicht nur in zweiten Nuten, sondern zweiten und einer oder mehreren weiteren Nuten besetzt.

Bei einer vorteilhaften Ausgestaltung weisen die Nuten eine nach radial innen oder außen gerichtete Nutöffnung auf. Von Vorteil ist dabei, dass eine einfache Herstellung durch Einlegen der vorgefertigten und vollständig oder teilweise vorgeformten Wicklungsdrahtabschnitte beziehungsweise Bündel ermöglicht ist.

Bei einer vorteilhaften Ausgestaltung werden die Bündel zunächst so miteinander verschränkt oder verflochten, dass die Wicklungsdrahtabschnitte die Stapelpositionen einnehmen, die sie in den Nuten haben werden, und anschließend in die Nuten des Blechpakets eingelegt. Das Verflechten kann in anderer Geometrie als der finalen Geometrie, beispielsweise in einer Ebene erfolgen. Elektrische Verbindungen zwischen den Bündeln können dabei vor oder nach jedem dieser Schritte oder auch aufgeteilt auf verschiedene Zeitpunkte, vor, während oder nach dem Verflechten und Einlegen in die Nuten geschaffen werden.

Bei einer vorteilhaften Ausgestaltung ist die jeweilige Nutöffnung mit einem jeweiligen Verschlussmittel, insbesondere Nutverschlusskeil, abgedeckt und/oder verschlossen. Von Vorteil ist dabei, dass der Draht nicht aus den Nuten herausrutschen kann.

Bei einer vorteilhaften Ausgestaltung entspricht die Anzahl der in der Abfolge elektrisch in Reihe geschalteten Wicklungsdrahtabschnitte der Anzahl der in der Nut radial aufeinander gestapelt angeordneten Wicklungsdrahtabschnitte. Bei Zweischichtwicklung entspricht sie der Hälfte der Stapelpositionen.

Insbesondere durchläuft die Abfolge alle Stapelpositionen der Nut. Von Vorteil ist dabei, dass in jeder Nut alle Stapelpositionen von der elektrisch in Reihe geschalteten Abfolge durchlaufen werden.

Bei einer weiteren vorteilhaften Ausgestaltung unterscheidet sich die Anzahl der Wicklungsdrahtabschnitte einer elektrisch in Reihe geschalteten Abfolge von der Anzahl der Stapelpositionen, so dass die Stapelpositionen in mehreren, beispielsweise benachbarten, Nuten eingenommen werden. Von Vorteil ist dabei, dass weniger Verschaltbereiche entstehen als in der alternativen Ausführung mit kürzeren Bündeln.

Bei einem Verfahren zum Herstellen einer elektrischen Maschine wird die Wicklung erzeugt, indem ein Bündel von Wicklungsdrahtabschnitten über einen Teil des Umlaufs oder den gesamten Umlauf gemeinsam geführt wird. Die Belegung aller Nuten erfolgt durch translatorische Wiederholung des Bündels oder der Bündel eines Umlaufs oder der zu einer Phase gehörenden Bündel.

Von Vorteil ist dabei, dass eine schnelle und wenig aufwendige Herstellung im Vergleich zur Formdrahtwicklung als Hairpin-Wicklung mit vielen Verbindungspunkten ermöglicht ist. In einer weiteren Ausführung ist der Stator entlang seines Umfangs in Segmente unterteilt, die auf die Wicklung aufgesteckt sind. Bei einer vorteilhaften Ausgestaltung werden die Wicklungsdrahtabschnitte derart verbunden, dass die durch Reihenschaltung von Wicklungsdrahtabschnitten gebildete Abfolge alle Stapelpositionen gleich oft durchläuft, insbesondere in auf eine Art belegte Nuten oder in auf zwei oder mehr unterschiedliche Arten belegte Nuten. Von Vorteil ist dabei, dass die Verluste minimierbar sind, insbesondere die Verluste durch einseitige Stromverdrängung.

Bei einer vorteilhaften Ausgestaltung ist die Wicklung gesehnt. Dies bedeutet, dass sich innerhalb einer Nut unterschiedliche Phasen befinden, die voneinander durch geeignete Isolationsmittel elektrisch isoliert sind. Die Bündel haben dadurch typischerweise in einem Wickelkopf einen größeren Abstand zwischen zwei Nutdurchgängen als im anderen Wickelkopf.

Die Erfindung wird nun anhand von Abbildungen näher erläutert:
In der Figur 1 ist ein erfindungsgemäßes Aktivteil, insbesondere Stator oder Rotor, eines Drehstrom-Elektromotors gezeigt, wobei ein Blechpaket 1 mit einem Bündel 2 von Wicklungsdrahtabschnitten bewickelt ist.
In der Figur 2 ist ein Bündel einer einzigen Phase, wie beispielsweise U-Phase, dargestellt, wobei hier die Wicklungsart einer Zweischichtwicklung der Bündel in Wellenwicklung erkennbar ist. Das Bündel durchläuft in den Nuten 3 abwechselnd eine untere Nutlage 20 und eine obere Nutlage 21.
In der Figur 3 ist ein Umlenkbereich, also ein Ausschnitt, des Bündels gezeigt, das aus vier Wicklungsdrahtabschnitten X1, X2, Y1, Y2 besteht.
Figur 4 zeigt einen Querschnitt durch das Blechpaket 1, so dass auch die Stapelposition (S1, S2, S3, S4, S5, S6, S7, S8) der in einer jeweiligen Nut 3 angeordneten, acht Wicklungsdrahtabschnitte, insbesondere stellvertretend mit X1 beschriftet, erkennbar ist. Um die Drähte herum ist ein Isolationsmittel 30 eingelegt. Die Nut ist mit einem Verschlussmittel 31 verschlossen.

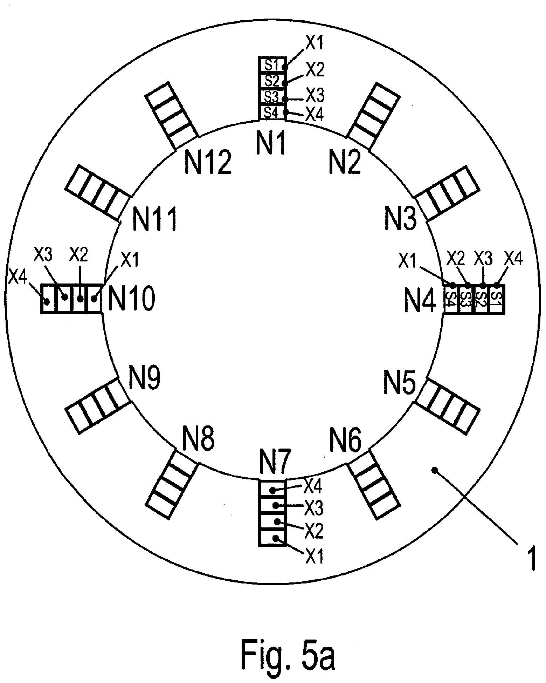

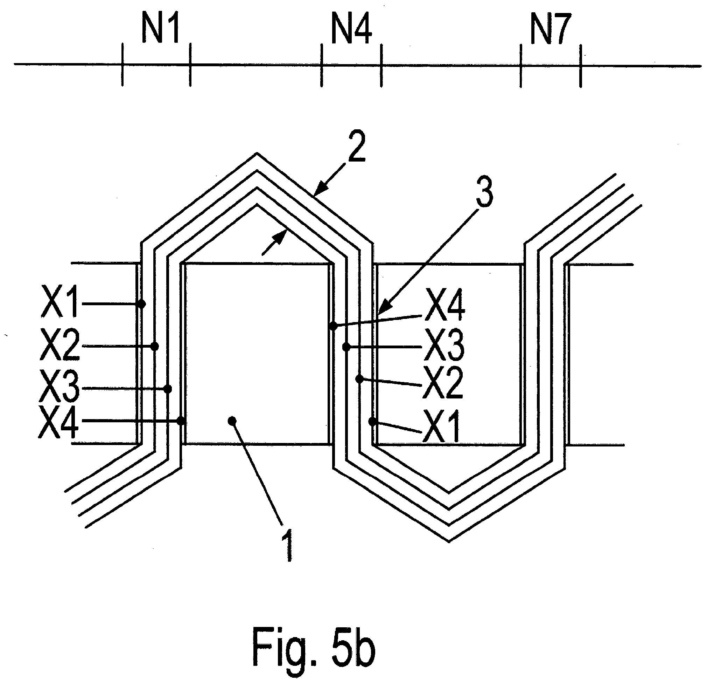

Figur 5a zeigt ein Blechpaket 1 mit zwölf Nuten N1, N2, N3, N4, N5, N6, N7, N8, N9, N10, N11, N12. Die erste Phase belegt dabei die Nuten N1, N4, N7, N10. Ein Bündel aus den Wicklungsdrahtabschnitten X1, X2, X3, X4 durchläuft diese Nuten und wechselt dabei die Stapelposition: In N1 und N7 liegt X1 auf Position S1, in N4 und N10 liegt X1 dagegen auf S4. In Figur 5b ist ein Schnitt durch die Nuten gezeigt, der den Wechsel der Stapelpositionen noch einmal verdeutlicht.

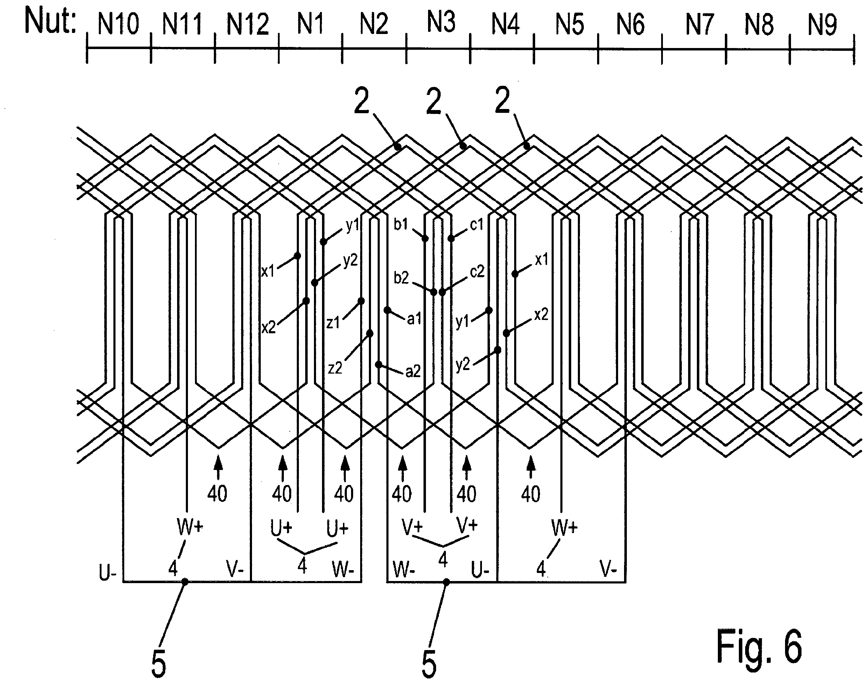

Figur 6 zeigt ein erfindungsgemäßes Wickel- und Verschaltungsschema. Die Phase U belegt die Nuten N1, N4, N7, und N10. Durch die Nut N1 verlaufen zwei Bündel, die aus den Wicklungsdrahtabschnitten x1 und x2 bzw. y1 und y2 bestehen. An den Ableitungen 4 beginnen jeweils Abfolgen von Wicklungsdrahtabschnitten. Nach einem Umlauf von N1 bis N10 wird der Drahtabschnitt x1 an einer Verbindungsstelle 40 mit x2 verbunden, so dass eine in Reihe geschaltete Abfolge aus x1 und x2 entsteht. Analog wird mit y1 und y2 verfahren. Die Phasen V und W bestehen aus den Wicklungsdrahtabschnitten b1, b2, c1, c2 bzw. z1, z2, a1, a2 und sind Kopien der Phase U. Die Enden der Abfolgen sind zu Sternpunkten 5 verschaltet. Die Wicklung ist als Zweischichtwicklung von Bündeln ausgeführt, die jeweils aus 2 Wicklungsdrahtabschnitten bestehen.

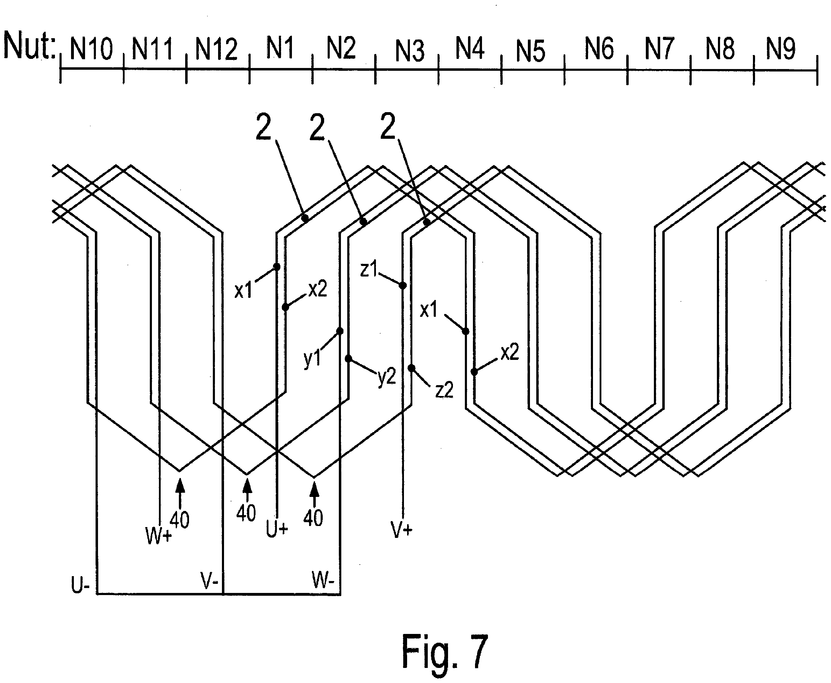

Figur 7 zeigt ein erfindungsgemäßes Wickel- und Verschaltungsschema. Die Wicklung ist als Einschichtwicklung von Bündeln 2 ausgeführt, die aus je zwei Wicklungsdrahtabschnitten x1, x2 bzw. y1, y2 oder z1, z2 bestehen. Diese sind jeweils an der Verbindungsstelle 40 in Reihe verschaltet.
In der Figur 8 ist ein erfindungsgemäßes Wicklungs- und Verschaltungsschema verdeutlicht. Dargestellt ist die Phase U. An den Verschaltpunkten 40 werden die Wicklungsdrahtabschnitte x1, x2, x3, x4 zu einer Abfolge in Reihe verschaltet (analog für y, z und a). Die Bündel 2 bestehen beispielsweise in Nut N13 aus x1, y1, x2 und y2 bzw. a3, z3, a4, z4.

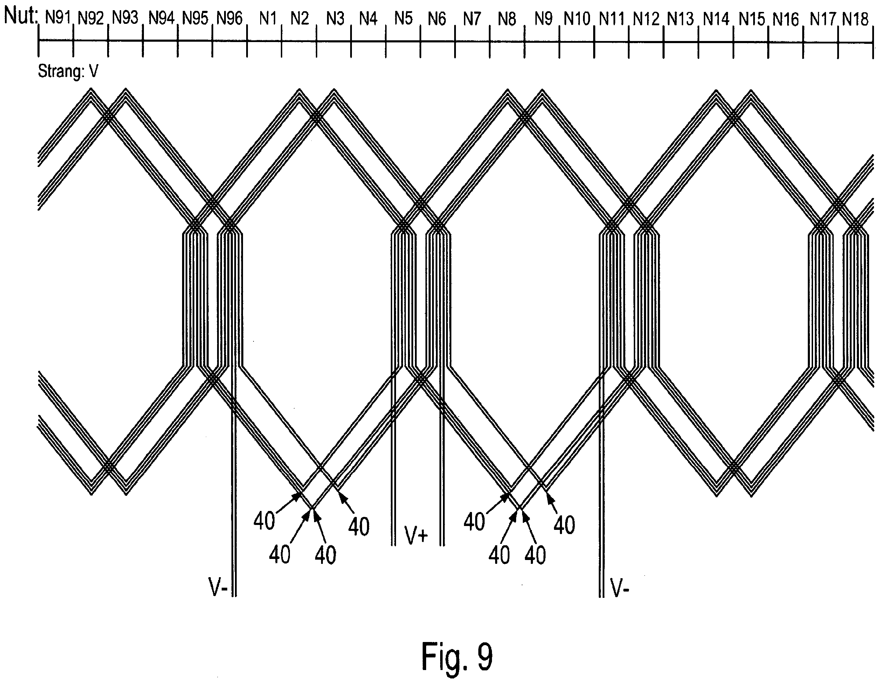

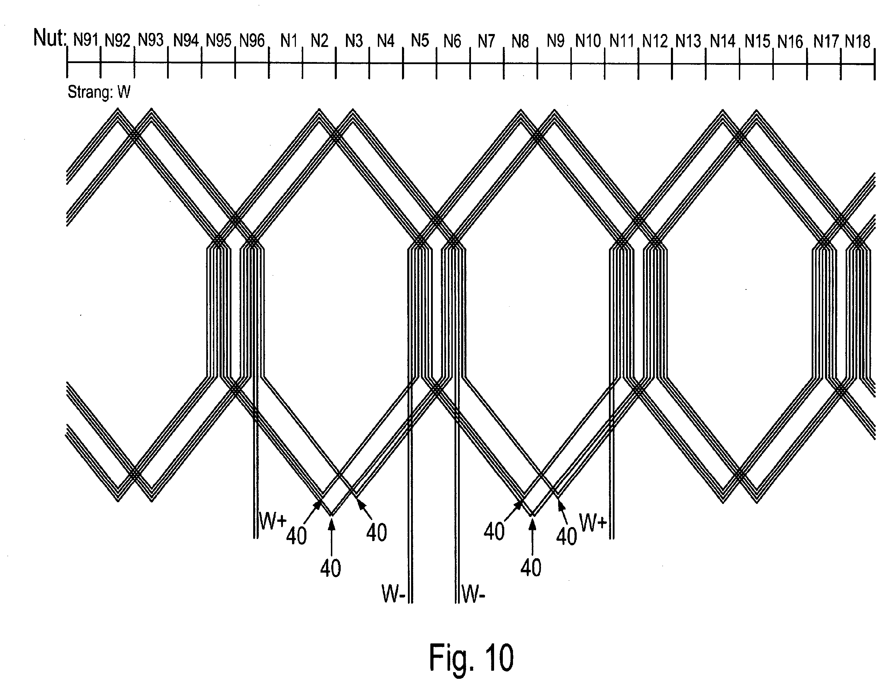

Figur 9 und 10 stellen das Analogon zu Figur 8 für die Phasen V und W dar.
In der Figur 11 ist die Gleichverteilung der Wicklungsdrahtabschnitte über die Positionen in einer Nut gezeigt, wobei die Position dem Umlauf zugeordnet ist.
In der Figur 12 ist die Belegung der Positionen in der Nut dargestellt.
In der Figur 13 ist ein erfindungsgemäßes Wicklungs- und Verschaltungsschema verdeutlicht.
In der Figur 14 ist ein der Figur 11 entsprechendes, aber anderes Ausführungsbeispiel dargestellt, das der Figur 13 entspricht. Analog zeigt Figur 15 die Belegung der Positionen in der Nut für diese Ausführung.

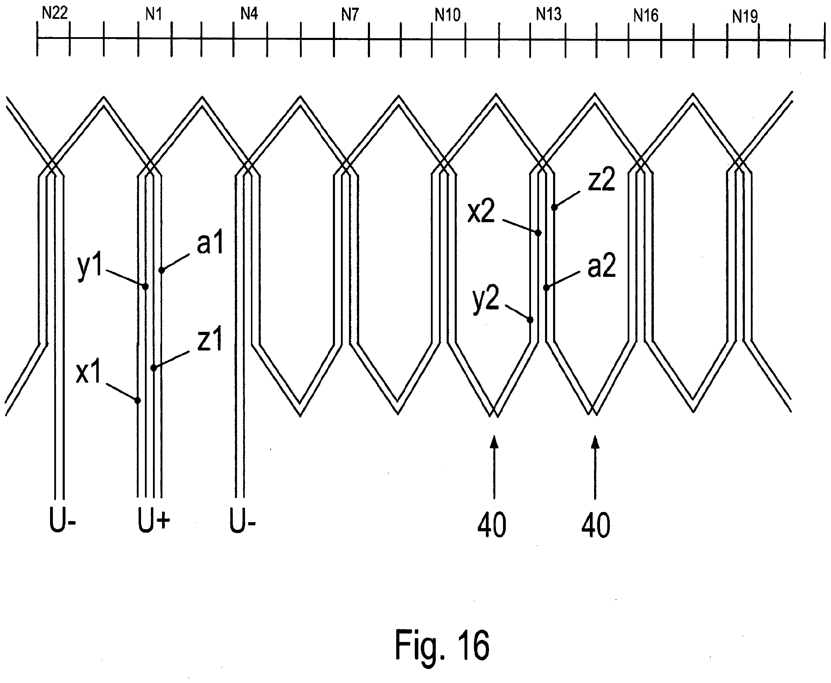

In Figur 16 ist ein Ausführungsbeispiel gezeigt, bei dem ein Wicklungsdrahtabschnitt kürzer als ein Umlauf ist und somit außer im Bereich der Nut N1 auch im Bereich der Nut N13 Verbindungsstellen zwischen Bündeln auftreten.

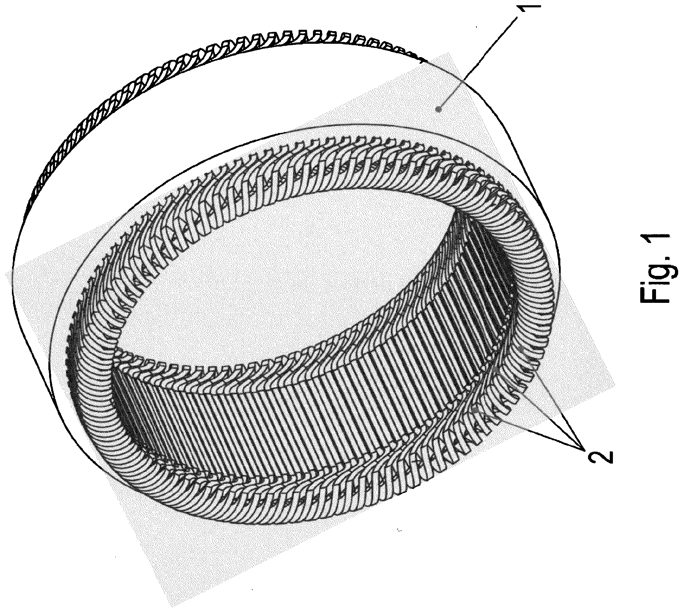

Wie in Figur 1 gezeigt, weist das Aktivteil, also ein Stator oder ein Rotor eines Drehstrommotors, ein Blechpaket auf, das aus in axialer Richtung Einzelblechteilen gestapelten zusammengesetzt ist.

Dabei weist das Blechpaket 1 axial sich erstreckende Nuten auf, in welche mehrere Bündel von Wicklungsdrahtabschnitten in Zweischichtwicklung in Wellenwicklung eingelegt sind.

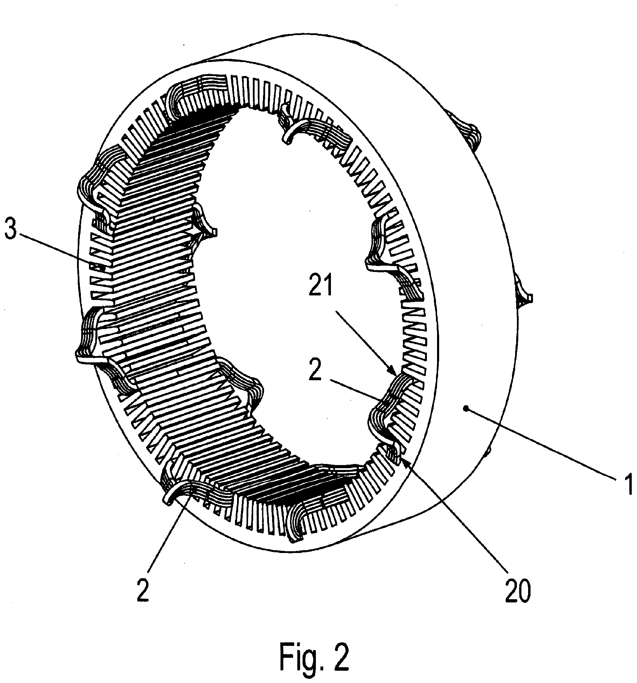

Wie in Figur 2 gezeigt, wird das jeweilige Bündel von Wicklungsdrahtabschnitten in Umfangsrichtung sich erstreckend mäanderförmig, also als Wellenwicklung, verlegt. Dabei sind als Bündel jeweils vier Wicklungsdrahtabschnitte gemeinsam verlegt. Das Bündel ist von Klebebandringen als Haltemittel zusammengehalten. Dabei sind dann die Haltemittel in Wicklungsdrahtrichtung regelmäßig voneinander beabstandet.

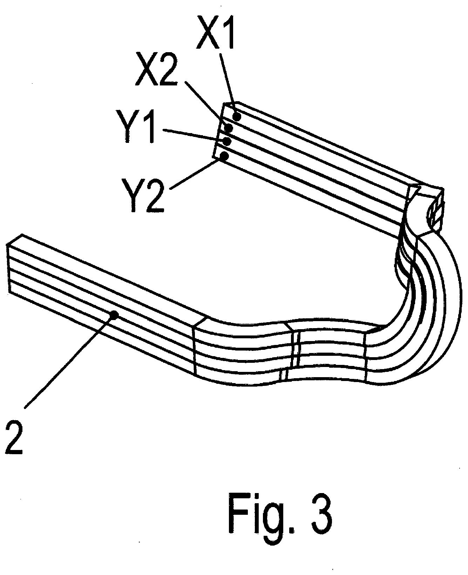

Das Bündel wird in einer ersten Nut in der unteren Nutlage angeordnet, tritt dann aus der Nut aus und ist außerhalb des Blechpakets in einem Umlenkbereich gebogen geformt, wie auch in Figur 3 näher dargestellt ist, danach tritt das Bündel in die obere Nutlage einer in Umfangsrichtung von der ersten Nut beabstandeten Nut wieder ein und durchläuft diese ebenfalls in axialer Richtung. Dieser Wechsel zwischen oberer und unterer Nutlage wird bei den nachfolgend durchlaufenen Nuten in analoger Weise fortgesetzt.

Jede Nut ist dabei gleichförmig ausgeführt und bietet jeweils eine untere Nutlage, also eine in der Nut radial außen angeordnete Position für das Bündel, und eine obere Nutlage, die radial innen angeordnet ist. Insbesondere schließt sie sich dabei in radial Richtung an die obere Nutlage direkt an. Jede der Nutlagen weist mehrere Stapelpositionen auf.

Betrachtet man also die Wicklung des Bündels, ist somit eine Zweischichtwicklung in Wellenwicklung realisiert.

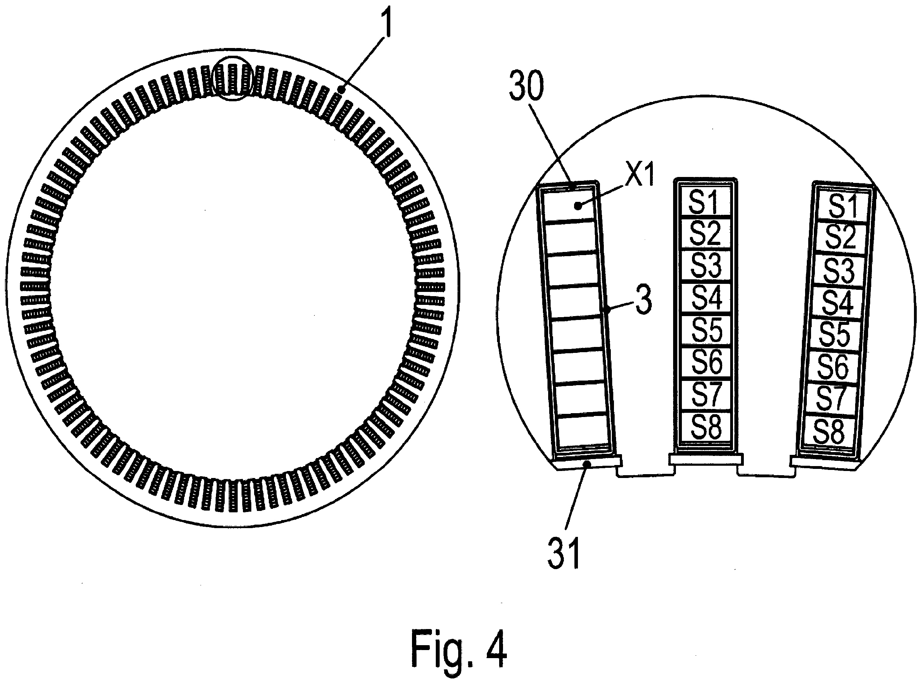

Wie in Figur 4 dargestellt, bietet jede Nut mehrere, z.B. acht Stapelpositionen ( S1, S2, S3, ...S8) für Wicklungsdrahtabschnitte in der Nut. Die Positionen sind präzise besetzbar beim Wickeln, da die Nut einen rechteckförmigen Nutquerschnitt aufweist und die Wicklungsdrahtabschnitte jeweils als Formdrahtabschnitte ausgeführt sind. Dabei ist der Drahtabschnittsquerschnitt ebenfalls rechteckförmig. Die oberen vier Positionen (S5, ...S8) sind von einem ersten Bündel und die unteren vier Positionen (S1, ... S4) sind von einem anderen Bündel besetzt.

Die Wicklungsdrahtabschnitte sind jeweils von einer Isolationsschicht und / oder von Backlack umgeben und somit gegeneinander elektrisch isoliert.

Außerdem ist zur Erhöhung der Isolationsfestigkeit ein Isoliermittel 30, insbesondere Isolierpapier, vorgesehen, das die in der Nut angeordneten Bündel umgibt und somit ist eine weitere Isolierung gegen das Blechpaket 1 erreicht. Diese Isolation kann auf die Isolation von unterschiedlichen Phasen, beispielsweise innerhalb einer Nut, ausgeweitet werden.

Wie in Figur- 6ff gezeigt, werden Bündel nach einem jeweiligen Umlauf, also nach einer ausgeführten Windung, elektrisch miteinander an Verbindungsstellen 40 verbunden. Hierbei werden die Bündel in einzelne Wicklungsdrahtabschnitte aufgetrennt und mit einem entsprechenden Wicklungsdrahtabschnitt des jeweils anderen Bündels verbunden. Es können dabei Paare von Wicklungsdrahtabschnitten auftreten, die neben dem gemeinsamen mechanischen auch einen gemeinsamen elektrischen Verlauf haben.

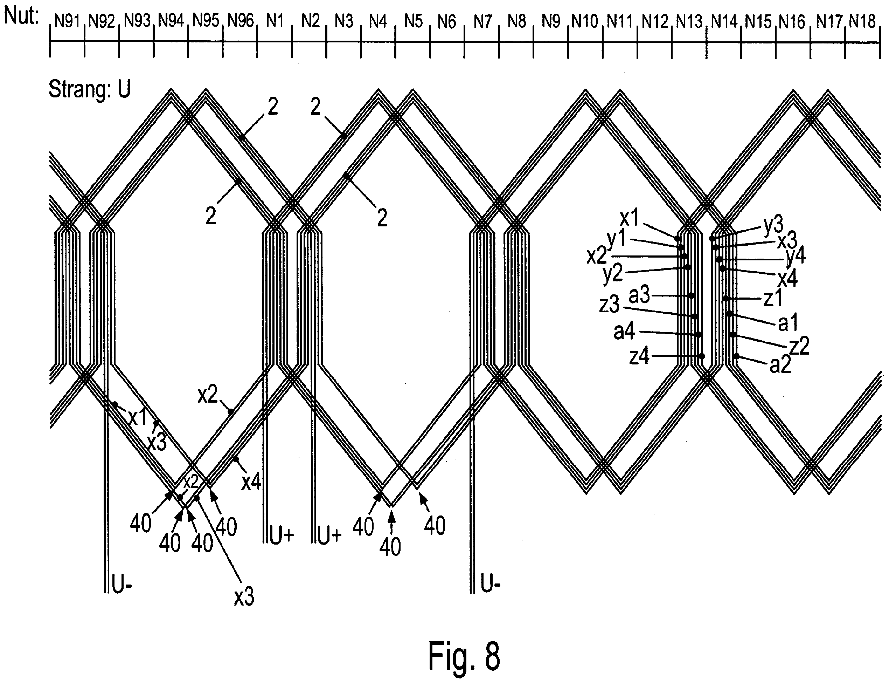

Das erste Bündel in der mit der Nummer N13 bezeichneten Nut in Figur 8 weist die vier Wicklungsdrahtabschnitte x1, y1, x2, y2 auf. Nach dem durchlaufenen Umlauf, also der ausgeführten Windung, werden jeweils zwei dieser vier Wicklungsdrahtabschnitte elektrisch verbunden (x1 mit x2 und y1 mit y2). Eine weitere Verbindung mit dem Bündel in Nut N14 vervollständigt die jeweilige Abfolge, beispielsweise x1, x2, x3, x4.

An der jeweiligen Verbindungsstelle 40 wird der Wicklungsdrahtabschnitt x1 und der Wicklungsdrahtabschnitt x2 verbunden. Nach einem weiteren Umlauf wird der Wicklungsdrahtabschnitt x2 und der Wicklungsdrahtabschnitt x3 verbunden. Nach nochmals einem weiteren Umlauf wird der Wicklungsdrahtabschnitt x3 und der Wicklungsdrahtabschnitt x4 verbunden. Ebenso werden die anderen Wicklungsdrahtabschnitte y1, y2, y3, y4 der Bündel verbunden und auch die Wicklungsdrahtabschnitte z1, z2, z3, z4 sowie a1, a2, a3, a4.

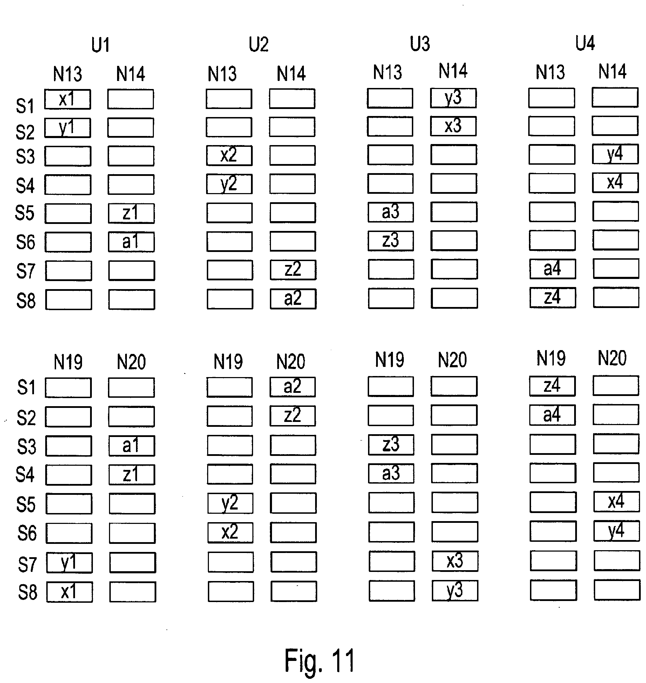

Wie in Figur 11 ersichtlich, ist x1 in der mit der Nummer N13 bezeichneten Nut in der ersten Position der Nut angeordnet, also oberhalb der Position von y1.

Nach einem Umlauf ist der mit x1 an der Verbindungsstelle 40 verbundene Wicklungsdrahtabschnitt x2 oberhalb des Wicklungsdrahtabschnittes y2 angeordnet. Außerdem ist x2 nun an der dritten Stapelposition in der Nut. Nach einem weiteren Umlauf, also nach 2 Umläufen ist der Wicklungsdrahtabschnitt x3 an der zweiten Position in der Nut angeordnet und nach dem vierten Umlauf auf der vierten Position.

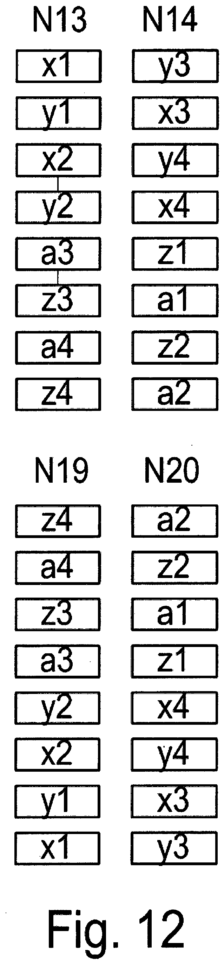

Somit ist eine Gleichverteilung der Wicklungsdrahtabschnitte x1, ... x4 über die vier ersten Positionen in der Nut erreicht. Dies ist insbesondere auch aus Figur 12 ersichtlich.

In der Nut wird somit also von der elektrisch in Reihe geschalteten Abfolge von Wicklungsdrahtabschnitten (x1, x2, x3, x4) jede Position in der Nut, also Stapelposition, gleich oft durchlaufen. Dabei durchläuft die Abfolge vier Windungen der Wicklung des Aktivteils.

Da das aus der mit der Nummer 13 bezeichneten Nut austretende Bündel eintritt in die mit der Nummer 19 bezeichneten Nut und für diese Nut 19 in analoger Weise nach vier Umläufen wiederum die vier letzten Positionen in dieser mit der Nummer 19 bezeichneten Nut besetzt werden, ist eine Gleichverteilung auch über diese vier letzten Positionen erreicht. Aufgrund der Zweischichtwicklung der Bündel werden in Nut N19 und N20 somit die Stapelposition S5-S8 aufgefüllt.

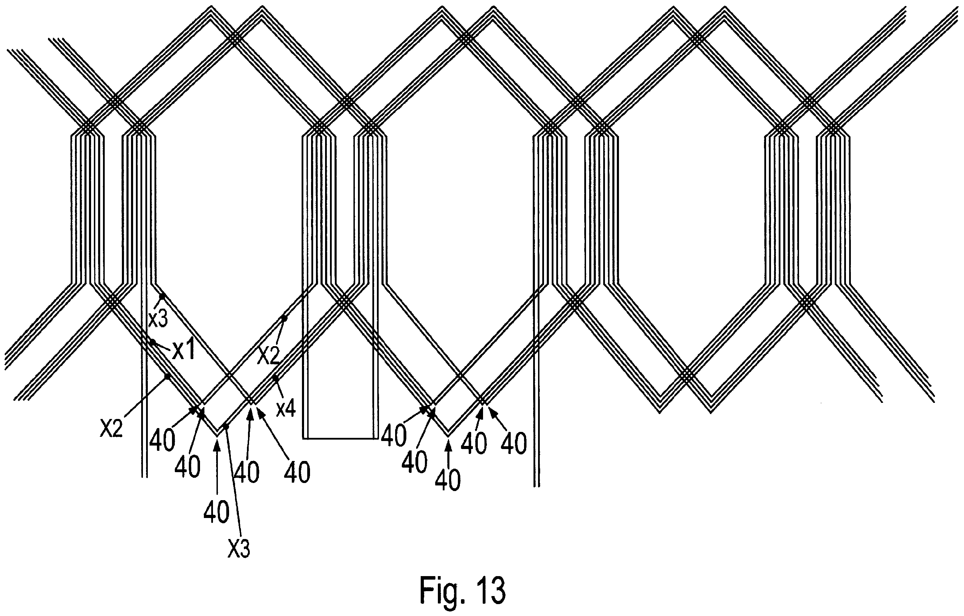

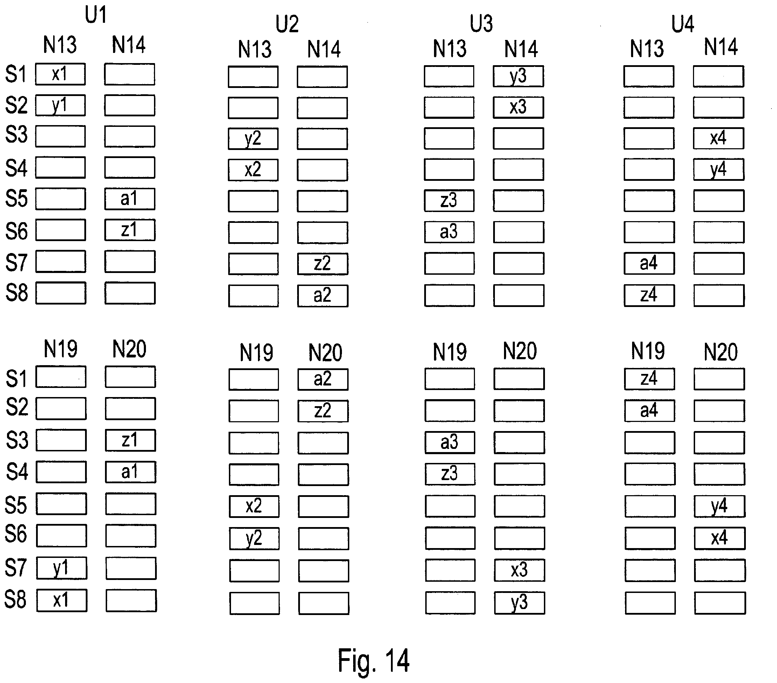

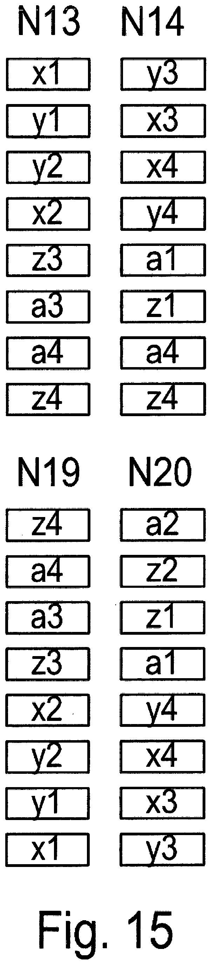

Ein weiteres Ausführungsbeispiel ist in den nachfolgenden Figuren dargestellt. Hierzu ist das Schaltschema in Figur 13 gezeigt und die Gleichverteilung der Wicklungsdrahtabschnitte in den Positionen der Nut in Figur 14 und 15.

Mittels der rechteckförmigen oder quadratförmigen Drahtquerschnitte ist ein hoher Füllfaktor erreichbar, da die Nut entsprechend der Form des Stapels von Wicklungsdrahtabschnitten geformt ist, also rechteckförmig.

Bei der Erfindung ist der einseitige Stromverdrängungsverlust minimierbar.

Bei einem weiteren erfindungsgemäßen Ausführungsbeispiel sind die Verbindungsstellen 40 in einem Umfangswinkelbereich angeordnet, insbesondere der kleiner ist als 45°. In den Bereichen der Verbindungsstellen 40 ist die axiale Ausdehnung größer als die des Wickelkopfes. Die Formdrähte werden miteinander mittels Schweißen, Löten oder Crimpen verbunden.

### Bezugszeichenliste

- 1: Blechpaket
- 2: Bündel von Wicklungsdrahtabschnitten
- 3: Nut
- 4: Ableitung
- 5: Sternpunkt
- 20: untere Nutlage
- 21: obere Nutlage
- 30: Isoliermittel
- 31: Nutverschlussmittel
- 40: Verbindungsstelle

- X1: Wicklungsdrahtabschnitt
- X2: Wicklungsdrahtabschnitt
- X3: Wicklungsdrahtabschnitt
- X4: Wicklungsdrahtabschnitt
- Y1: Wicklungsdrahtabschnitt
- Y2: Wicklungsdrahtabschnitt
- Y3: Wicklungsdrahtabschnitt
- Y4: Wicklungsdrahtabschnitt
- a1: Wicklungsdrahtabschnitt
- a2: Wicklungsdrahtabschnitt
- a3: Wicklungsdrahtabschnitt
- a4: Wicklungsdrahtabschnitt
- z1: Wicklungsdrahtabschnitt
- Z2: Wicklungsdrahtabschnitt
- Z3: Wicklungsdrahtabschnitt
- Z4: Wicklungsdrahtabschnitt
- b1: Wicklungsdrahtabschnitt
- b2: Wicklungsdrahtabschnitt
- c1: Wicklungsdrahtabschnitt
- c2: Wicklungsdrahtabschnitt

- N1: Nut
- N2: Nut
- N3: Nut

- S1: Stapelposition eines Wicklungsdrahtabschnitts in der Nut
- S2: Stapelposition eines Wicklungsdrahtabschnitts in der Nut
- S3: Stapelposition eines Wicklungsdrahtabschnitts in der Nut
- S4: Stapelposition eines Wicklungsdrahtabschnitts in der Nut
- S5: Stapelposition eines Wicklungsdrahtabschnitts in der Nut
- S6: Stapelposition eines Wicklungsdrahtabschnitts in der Nut
- S7: Stapelposition eines Wicklungsdrahtabschnitts in der Nut
- S8: Stapelposition eines Wicklungsdrahtabschnitts in der Nut

- U1: Umlauf, insbesondere Windung
- U2: Umlauf, insbesondere Windung
- U3: Umlauf, insbesondere Windung
- U4: Umlauf, insbesondere Windung

## Patentansprüche

1. Elektrische Maschine, insbesondere Drehstrommotor, mit einem Stator oder Rotor als Aktivteil,
wobei das Aktivteil ein Blechpaket (1) und eine Spulenwicklung aufweist,
wobei das Blechpaket (1) in Rotorachsrichtung sich erstreckende Nuten (3) mit jeweils rechteckförmigem oder quadratischem Nutquerschnitt aufweist,
wobei die Wicklung Wicklungsdrahtabschnitte aufweist und aus Formdraht mit rechteckförmigem oder quadratischem Drahtquerschnitt gefertigt ist,
und in jeder Nut (3) eine Anzahl von in der Nut (3) radial aufeinander gestapelt angeordneten Wicklungsdrahtabschnitten geführt sind,
wobei vier Wicklungsdrahtabschnitte in Bündeln parallel geführt sind, also physisch in gleicher Richtung verlaufen,
wobei die Wicklung eine als Zweischichtwicklung ausgeführte Wellenwicklung ist, bei welcher als Bündel (2) jeweils vier Wicklungsdrahtabschnitte (X1, X2, Y1, Y2) gemeinsam verlegt sind, wobei das jeweilige Bündel zusammengehalten von als Haltemittel fungierenden Klebebandringen ist, wobei die Haltemittel in Wicklungsdrahtrichtung regelmäßig voneinander beabstandet sind
und das Bündel abwechselnd in einer Nut in einer unteren Nutlage angeordnet ist und in einer in Umfangsrichtung beabstandeten Nut in einer oberen Nutlage angeordnet ist,
wobei jeder Wicklungsdrahtabschnitt alternierend jeweils zwei gleiche Stapelpositionen mehrfach hintereinander durchläuft,
wobei die Bündel (2) als Windung, also Umlauf der Wicklung, um die Rotorachse herum ausgeführt sind, wobei sich ein einzelnes Bündel (2) über den gesamten Umlauf erstreckt und durch die Summe aller Bündel (2) alle Nuten (3) des Aktivteils mit Wicklungsdrahtabschnitten belegt sind,
wobei die Wicklungsdrahtabschnitte eines Bündels (2) mit Wicklungsdrahtabschnitten eines anschließenden Bündels (2) durch Schweiß-, Löt- oder Crimpverbindung elektrisch verbunden sind und die dadurch entstehenden elektrisch in Reihe geschalteten Abfolgen jeweils vor und nach der Verbindungsstelle (40) unterschiedliche Stapelpositionen durchlaufen,
wobei eine elektrisch in Reihe geschaltete Abfolge von Wicklungsdrahtabschnitten jede Stapelposition gleich oft durchläuft.

2. Elektrische Maschine nach Anspruch 1,
**dadurch gekennzeichnet, dass**
die jeweilige Nutöffnung mit einem jeweiligen Verschlussmittel (31), also Nutverschlusskeil, abgedeckt und verschlossen ist.

3. Elektrische Maschine nach mindestens einem der vorangegangenen Ansprüche, **dadurch gekennzeichnet,**
**dass** eine elektrisch in Reihe geschaltete Abfolge eine Anzahl von
Wicklungsdrahtabschnitten
mehrfach um das Aktivteil umläuft, insbesondere zwischen zweimal und sechsmal, insbesondere viermal.

4. Elektrische Maschine nach mindestens einem der vorangegangenen Ansprüche,
**dadurch gekennzeichnet, dass**
eine elektrisch in Reihe geschaltete Abfolge von Wicklungsdrahtabschnitten in unterschiedlichen Umläufen in Umfangsrichtung des Aktivteils herum unterschiedliche Stapelpositionen belegt.

5. Elektrische Maschine nach mindestens einem der vorangegangenen Ansprüche,
**dadurch gekennzeichnet, dass**
mehrere, mit derselben Phase belegte Nuten (3) in Umfangsrichtung oder entgegengesetzt zur Umfangsrichtung nebeneinanderliegen und die unterschiedlichen Wicklungsdrahtabschnitte in den benachbarten Nuten (3) zu einer gemeinsamen, elektrisch in Reihe geschalteten Abfolge verschaltet sind.

6. Elektrische Maschine nach mindestens einem der vorangegangenen Ansprüche,
**dadurch gekennzeichnet, dass**
pro elektrischer Phase genau eine elektrisch in Reihe geschaltete Abfolge von Wicklungsdrahtabschnitten vorgesehen ist.

7. Elektrische Maschine nach mindestens einem der vorangegangenen Ansprüche,
**dadurch gekennzeichnet, dass**
die Wicklung gesehnt ist.

8. Elektrische Maschine nach mindestens einem der vorangegangenen Ansprüche,
**dadurch gekennzeichnet, dass**
die Nuten eine nach radial innen gerichtete Nutöffnung aufweisen,
und/oder dass
die jeweilige Nutöffnung mit einem jeweiligen Verschlussmittel, insbesondere Nutverschlusskeil, abgedeckt und/oder verschlossen ist.

## Claims

1. Electric machine, in particular a three-phase motor, comprising a stator or a rotor as the active component,
wherein the active component has a laminated core (1) and a coil winding,
wherein the laminated core (1) has grooves (3) that extend in the rotor-axis direction, each having a rectangular or square groove cross section,
wherein the winding has winding-wire portions and is made from profiled wire having a rectangular or square wire cross section,
and in each groove (3) there are guided a number of winding-wire portions arranged in a manner radially stacked one on top of the other in the groove (3),
wherein four winding-wire portions are guided in parallel in bundles, i.e. physically extend in the same direction,
wherein the winding is a wave winding in the form of a double-layer winding,
in each of which four winding-wire portions (X1, X2, Y1, Y2) are installed together as a bundle (2), wherein each bundle is held together by adhesive-tape rings acting as retaining means, wherein the retaining means are regularly spaced apart from one another in the winding-wire direction,
and the bundle is arranged alternately in a lower groove position in one groove and in an upper groove position in a groove spaced apart therefrom in the circumferential direction, wherein each winding-wire portion in each case passes alternately through two identical stacking positions multiple times in succession,
wherein the bundle (2) is configured as a turn, i.e. a loop, of the winding around the rotor axis, wherein an individual bundle (2) extends over the entire loop and all the grooves (3) of the active component are occupied with winding-wire portions by the sum of all the bundles (2),
wherein the winding-wire portions of a bundle (2) are electrically connected to winding-wire portions of an adjoining bundle (2) by welded, soldered or crimped connections, and the resulting sequences wired electrically in series in each case pass through different stacking positions upstream and downstream of the connection site (40),
wherein a winding-wire portion sequence wired electrically in series passes through each stacking position the same number of times.

2. Electric machine according to claim 1,
**characterised in that**
each groove opening is covered with and sealed by a respective closure means (31), i.e. a groove closure wedge.

3. Electric machine according to at least one of the preceding claims,
**characterised in that**
a sequence wired electrically in series, a number of winding-wire portions, runs around the active component multiple times, in particular between two times and six times, in particular four times.

4. Electric machine according to at least one of the preceding claims,
**characterised in that**
a winding-wire portion sequence wired electrically in series occupies different stacking positions in different loops in the circumferential direction of the active component.

5. Electric machine according to at least one of the preceding claims,
**characterised in that**
a plurality of grooves (3) occupied by the same phase are adjacent to one another in the circumferential direction or in the opposite direction to the circumferential direction, and the different winding-wire portions are interconnected in the adjacent grooves (3) so as to form a common sequence wired electrically in series.

6. Electric machine according to at least one of the preceding claims,
**characterised in that**
exactly one winding-wire portion sequence wired electrically in series is provided per electrical phase.

7. Electric machine according to at least one of the preceding claims,
**characterised in that**
the winding is chorded.

8. Electric machine according to at least one of the preceding claims,
**characterised in that**
the grooves have a radially inwardly facing groove opening
and/or **in that**
each groove opening is covered with and/or sealed by a respective closure means, in particular a groove closure wedge.

## Revendications

1. Machine électrique, en particulier moteur triphasé, avec un stator ou un rotor comme partie active,
dans laquelle la partie active présente un empilage de tôles (1) et un enroulement de bobine,
dans laquelle l'empilage de tôles (1) présente des encoches (3) s'étendant dans la direction axiale du rotor et ayant chacune une section transversale d'encoche rectangulaire ou carrée,
dans laquelle l'enroulement présente des portions de fil d'enroulement et est constitué d'un fil mis en forme avec une section transversale de fil rectangulaire ou carrée,
et un certain nombre de portions de fil d'enroulement disposées en étant empilées les unes sur les autres radialement dans l'encoche (3) sont guidées dans chaque encoche (3),
dans laquelle quatre portions de fil d'enroulement sont guidées parallèlement en faisceaux, c'est-à-dire s'étendent physiquement dans la même direction,
dans laquelle l'enroulement est un enroulement d'arbre réalisé sous la forme d'un enroulement à deux couches dans lequel quatre portions de fil d'enroulement (X1, X2, Y1, Y2) sont respectivement posées ensemble sous forme de faisceau (2), le faisceau respectif étant maintenu ensemble par des anneaux de bande adhésive agissant comme moyens de retenue, les moyens de retenue étant régulièrement espacés les uns des autres dans la direction du fil d'enroulement
et le faisceau étant disposé alternativement dans une encoche dans une position d'encoche inférieure et dans une encoche dans une position d'encoche supérieure espacée dans la direction circonférentielle,
dans laquelle chaque portion de fil d'enroulement passe alternativement par deux positions d'empilage identiques plusieurs fois l'une après l'autre,
dans laquelle les faisceaux (2) sont réalisés sous la forme d'un enroulement, c'est-à-dire un tour de l'enroulement, autour de l'axe de rotor, un seul faisceau (2) s'étendant sur tout le tour et, par la somme de tous les faisceaux (2), toutes les encoches (3) de la partie active étant occupées par des portions de fil d'enroulement,
dans laquelle les portions de fil d'enroulement d'un faisceau (2) sont reliées électriquement à des portions de fil d'enroulement d'un faisceau adjacent (2) au moyen d'une liaison soudée, brasée ou sertie et les séquences montées électriquement en série qui en résultent passent par des positions d'empilage différentes respectivement avant et après le point de liaison (40),
dans laquelle une séquence montée électriquement en série de portions de fil d'enroulement passe par chaque position d'empilage le même nombre de fois.

2. Machine électrique selon la revendication 1,
**caractérisée en ce**
**que** l'ouverture d'encoche respective est couverte et fermée par un moyen de fermeture respectif (31), c'est-à-dire un coin de fermeture d'encoche.

3. Machine électrique selon au moins l'une des revendications précédentes,
**caractérisée en ce**
**qu'**une séquence montée électriquement en série fait le tour d'un certain nombre de portions de fil d'enroulement autour de la partie active plusieurs fois, en particulier entre deux et six fois, en particulier quatre fois.

4. Machine électrique selon au moins l'une des revendications précédentes,
**caractérisée en ce**
**qu'**une séquence montée électriquement en série de portions de fil d'enroulement occupe des positions d'empilage différentes dans des tours différents dans la direction circonférentielle de la partie active.

5. Machine électrique selon au moins l'une des revendications précédentes,
**caractérisée en ce**
**que** plusieurs encoches (3) occupées par la même phase sont adjacentes les unes aux autres dans la direction circonférentielle ou opposées par rapport à la direction circonférentielle et les différentes portions de fil d'enroulement dans les encoches adjacentes (3) sont câblées pour former une séquence commune montée électriquement en série.

6. Machine électrique selon au moins l'une des revendications précédentes,
**caractérisée en ce**
**qu'**il est prévu, par phase électrique, exactement une séquence montée électriquement en série de portions de fil d'enroulement.

7. Machine électrique selon au moins l'une des revendications précédentes,
**caractérisée en ce**
**que** l'enroulement est cordé.

8. Machine électrique selon au moins l'une des revendications précédentes,
**caractérisée en ce**
**que** les encoches présentent une ouverture d'encoche dirigée radialement vers l'intérieur,
et/ou
**que** l'ouverture d'encoche respective est couverte et/ou fermée par un moyen de fermeture respectif, en particulier un coin de fermeture d'encoche.
